# EUROPEAN PATENT SPECIFICATION

(11) **EP 3 792 696 B1**
(45) Date of publication and mention of the grant of the patent: **02.08.2023**
(21) Application number: 20189982.0
(22) Date of filing: 07.08.2020
(51) Int. Cl.: G03G 15/00, G06F 3/12, H04N 1/00

(54) **IMAGE FORMING APPARATUS AND METHOD OF CONTROLLING THE IMAGE FORMING APPARATUS**
BILDERZEUGUNGSVORRICHTUNG UND VERFAHREN ZUR STEUERUNG DER BILDERZEUGUNGSVORRICHTUNG
APPAREIL DE FORMATION D'IMAGES ET PROCÉDÉ DE COMMANDE DE L'APPAREIL DE FORMATION D'IMAGES

(30) Priority: 13.09.2019 JP 2019167226
(43) Date of publication of application: 17.03.2021
(73) Proprietor: Toshiba Tec Kabushiki Kaisha, Shinagawa-ku Tokyo 141-8562 (JP)
(72) Inventor: FUKUTA, Toshinori, Shinagawa-ku Tokyo 141-8562 (JP); WATANABE, Naoki, Shinagawa-ku Tokyo 141-8562 (JP)
(74) Representative: Bandpay & Greuter

(56) References cited:
- JP-A- 2005 066 894
- JP-A- 2010 003 083
- JP-A- 2012 004 694
- US-A1- 2010 290 074

## Description

### FIELD

Embodiments described herein relate generally to an image forming apparatus, a method of controlling an image forming apparatus.

### BACKGROUND

It is common for an image forming apparatus, such as a printer, to have a function of entering a power saving state after some idle time. In this context, the power saving state is a state in which the image forming apparatus does not supply power to some of the components of the image forming apparatus. The image forming apparatus can thus reduce power consumption by entering such a power saving state. However, in general, it takes a longer time for the image forming apparatus to start image formation processing from the power saving state than from the non-power saving state. However, typically, a user of the image forming apparatus desires to reduce waiting times for image formation even when returning from the power saving state. regarding view of this user preference, a technology has been studied for incorporation into certain image forming apparatus of beginning the return from the power saving state when the approach of a person (a potential user) is detected by a human sensor. However, such a technology requires incorporation of a human sensor into the image forming apparatus. Therefore, it may be difficult to reduce the waiting times for the return from a power saving state in certain types of image forming apparatuses since not all image forming apparatuses include a human sensor.

JP2012004694, JP2005066894, and JP2010003083 disclose the image processing apparatus according to the preamble of claim 1.

### DESCRIPTION OF THE DRAWINGS

FIG. 1 is a diagram illustrating a system configuration of an image forming system according to an embodiment.
FIG. 2 is a hardware block diagram of an image forming apparatus.
FIG. 3 is a diagram illustrating inventory information according to an embodiment.
FIG. 4 is a diagram illustrating a table of the number of connected devices.
FIG. 5 is a flowchart of a process for calculating the number of connected devices and an average value thereof.
FIG. 6 is a flowchart of a state change process performed by an image forming apparatus.

### DETAILED DESCRIPTION

The objective of the present invention is to provide an image forming apparatus and a control method, by which it is possible to reduce the waiting times of a user.

To this end, there is provided an image processing apparatus includes a printer unit configured to print an image on a sheet, a network interface, and a controller configured to control modes of the image processing apparatus, the modes including a first mode in which power is supplied to the printer unit and a second mode in which power is not supplied to the printer unit. The controller is further configured to acquire device information via the network interface from one or more devices that are connected to a network, count the number of the devices connected to the network, calculate a statistical value for the counted number of the devices and a previous number of devices connected to the network at a previous time, control the modes based on the counted number of the devices and the statistical value, and maintain the first mode when the counted number of the devices and the statistical value satisfy a predetermined condition. The statistical value is an average value of the counted number of the devices at a plurality of previous times, and the predetermined condition is satisfied when the counted number of the devices is greater than the average value.

Preferably, the controller is configured to control the printer unit to perform a warm-up operation when the predetermined condition is satisfied.

Preferably, the device information is acquired at predetermined intervals.

Preferably, the device information is acquired at predetermined times during a day.

Preferably, the controller is further configured to acquire first and second device information by transmitting first and second packets, respectively.

Preferably, the controller is also configured to identify the devices by using the first and second device information to count the number thereof.

Preferably, the controller is further configured to identify a type of each of the devices using the first and second device information.

Preferably, the controller is further configured to count the number of the devices of a predetermined type.

Preferably, the first and second packets are transmitted according to different protocols.

Preferably, the first device information includes a network address used by a device in the network, and the second device information includes a port number that is open on the device.

The present invention further relates to a method performed by an image processing apparatus having a power saving mode, the method comprising the following steps : acquiring device information from one or more devices connected to a network; counting the number of the devices connected to the network; calculating a statistical value for the number of the devices connected to the network based on a previous number of devices connected to the network at a previous time; controlling whether the image processing apparatus can enter the power saving mode based on the counted number of the devices and the statistical value; and maintaining a non-power saving mode when the counted number of the devices and the statistical value satisfy a predetermined condition. The statistical value is an average value of the counted number of the devices at a plurality of previous time, and the predetermined condition is satisfied when the counted number of the devices is greater than the average value.

The method may further comprise a step of performing a warm-up operation when the predetermined condition is satisfied.

Preferably, the device information is acquired at predetermined intervals.

Preferably, the device information is acquired at predetermined times during a day.

Preferably, the acquiring further comprises acquiring first and second device information by transmitting first and second packets, respectively.

Preferably, the number of the devices is counted after the devices have been identified using the first and second device information.

Preferably, a type of each of the devices is identified using the first and second device information.

Preferably, the number of the devices of a predetermined type is counted.

Preferably, the first and second packets are transmitted according to different protocols.

The present disclosure further relates to a non-claimed non-transitory computer readable medium storing a program that when executed causes an image processing apparatus having a power saving mode to execute a method comprising: acquiring device information from one or more devices connected to a network; counting the number of the devices connected to the network; calculating a statistical value for the number of the devices connected to the network based on a previous number of devices connected to the network at a previous time; and controlling whether the image processing apparatus can enter the power saving mode based on the counted number of the devices and the statistical value.

Hereinafter, an image forming apparatus and a control method according to certain example embodiments will be described with reference to the drawings.

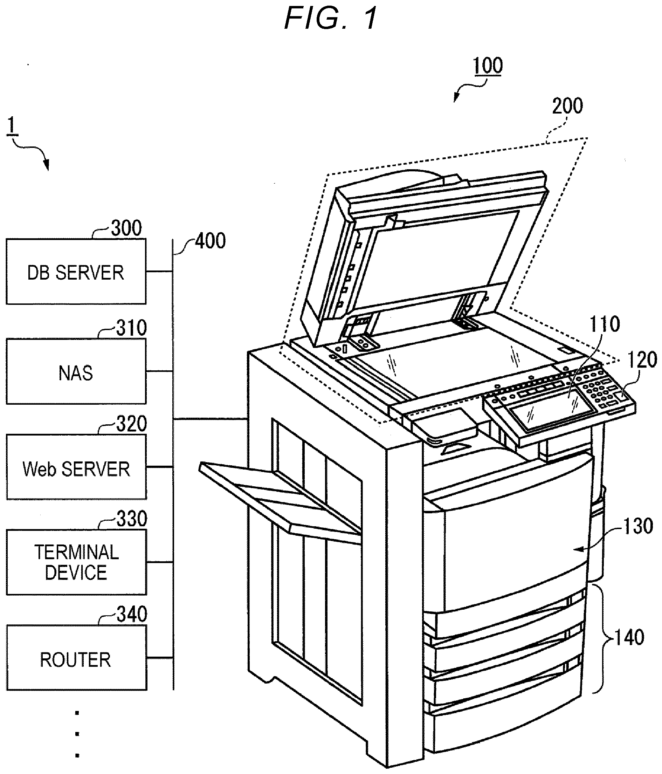

FIG. 1 is a diagram illustrating a system configuration of an image forming system 1 according to an embodiment. The image forming system 1 includes an image forming apparatus 100, a database (DB) server 300, a network attached storage (NAS) 310, a web server 320, a terminal device 330, and a router 340. The image forming apparatus 100 forms an image on a sheet by using a consumable material such as an ink or a toner. The image forming apparatus 100 is a multifunctional peripheral (MFP), for example. The DB server 300 is an information processing device that stores data in a database type format. The DB server 300 may be a device that stores data to be used within an organization to which potential users of the image forming system 1 belong or a device that stores data related to the image forming apparatus 100. The NAS 310 is a file server connected to a network 400. The NAS 310 is a device that stores the data (user data) to be used within the organization. The web server 320 communicates with a communication device, such as the terminal device 330, based on a protocol such as a hypertext transfer protocol (HTTP). The web server 320 transmits a web page written in hypertext markup language (HTML) with an image to a web browser, for example, operating on the terminal device 330. The terminal device 330 is an information processing device that can be used by the user. The terminal device 330 transmits a print job for the user to the image forming apparatus 100. The router 340 is a communication device that functions as a relay or connection point between two or more different networks. The router 340 has a routing function of selecting a network to which data from a device connected to the network 400 is to be transmitted. The router 340 has a function of identifying a device to which data from a network different from the network 400 is to be transmitted. The data transmitted by the router 340 can be a printer job, for example. The image forming apparatus 100, the DB server 300, the NAS 310, the web server 320, the terminal device 330, and the router 340 are communicably connected to one another via the network 400. The devices connected to the network 400 are not limited to the image forming apparatus 100, the DB server 300, the NAS 310, the web server 320, the terminal device 330, and the router 340. Any other device may be connected to the network 400.

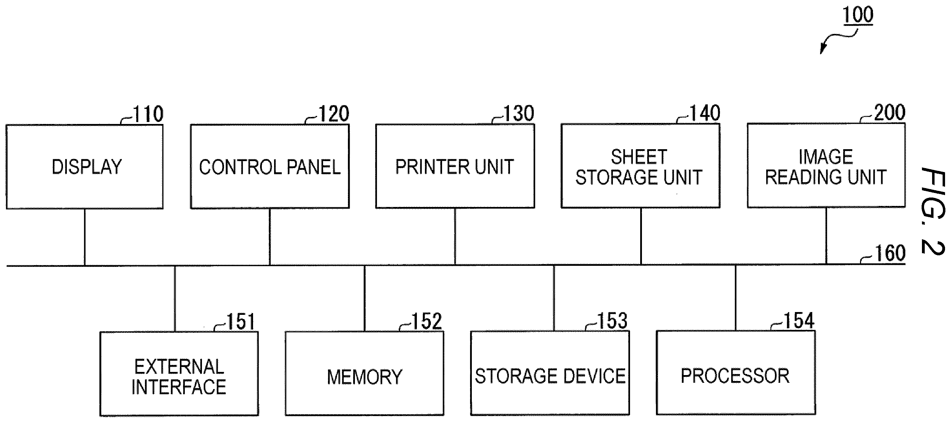

FIG. 2 is a hardware block diagram of the image forming apparatus 100 according to an embodiment. The image forming apparatus 100 includes a display 110, a control panel 120, a printer unit 130, a sheet storage unit 140, an external interface 151, a memory 152, a storage device 153, a processor 154, and an image reading unit 200. The printer unit 130 of the image forming apparatus 100 may be a device that fixes a toner image or an inkjet type device. Each unit is connected to a system bus 160 such that data communication is possible.

The image forming apparatus 100 forms an image on a sheet by using toner or ink. When toner is used, the toner is ultimately heated and fixed on the sheet. When ink is used, the ink is ejected or otherwise dispensed on the sheet to form an image on the sheet. The sheet can be any type of paper or media. For example, the sheet can be label paper. In general, the sheet may be of any type as long as the image forming apparatus 100 can form an image on the sheet. Examples of the toner include decolorable toner, non-decolorable toner (also referred to as standard or normal toner), decorative toner and the like.

The display 110 is an image display device such as a liquid crystal display and an organic electroluminescence (EL) display. The display 110 displays various types of information related to the image forming apparatus 100.

The control panel 120 has a plurality of buttons and/or keys. The control panel 120 receives an operation from a user. The control panel 120 outputs a signal according to the operation performed by the user to a control unit (e.g., a processor) of the image forming apparatus 100. The display 110 and the control panel 120 may be integrated into a touch-enabled display.

The printer unit 130 forms an image on the sheet based on image information generated by the image reading unit 200 or image information received from another device via the network 400. The printer unit 130 forms an image by the following process, for example. An image forming unit of the printer unit 130 forms an electrostatic latent image on a photosensitive drum based on the image information. The image forming unit of the printer unit 130 develops the electrostatic latent image into a visible image by attaching the developer to the electrostatic latent image. A transfer unit of the printer unit 130 transfers the visible image to the sheet. A fixing unit of the printer unit 130 fixes the visible image to the sheet by heating and pressing the sheet. The sheet may be fed from the sheet storage unit 140 or a manual feed tray.

The sheet storage unit 140 stores sheets to be used by the printer unit 130.

The external interface 151 is a communication interface. The external interface 151 communicates with other devices (for example, the DB server 300, the NAS 310, the web server 320, the terminal device 330, and the router 340) via the network 400 by using a predetermined protocol.

The memory 152 temporarily stores data to be used by each unit of the image forming apparatus 100. The memory 152 is a random access memory (RAM), for example. The memory 152 stores data required when the image forming apparatus 100 operates. The memory 152 may temporarily store digital data generated by the image reading unit 200. The memory 152 may temporarily store data of an image to be formed by the image forming apparatus 100.

The storage device 153 is a storage device such as a magnetic hard disk device and a semiconductor storage device. The storage device 153 stores data required when the image forming apparatus 100 operates. The storage device 153 stores a device information acquisition program having a function of acquiring device information from a communication device connected to the network 400, for example. The device information acquisition program may be any program that can acquire such device information using a simple network management protocol (SNMP) and a port scan.

The processor 154 controls the operation of each unit of the image forming apparatus 100. The processor 154 performs a process by loading a software program stored in the storage device 153 onto the memory 152 and executing the software program. The processor 154 controls operation states of the image forming apparatus 100 including a normal state (first mode) and a power saving state. The normal state is a state in which predetermined power is supplied to a predetermined device of the image forming apparatus 100. In the power saving state (second mode), power consumption is lower than the normal state. For example, in the power saving state, power is not supplied to one or more of the components of the image forming apparatus 100 (e.g., the printer unit 130).

The image reading unit 200 reads image information from a sheet or document, based on brightness and darkness of light. The image reading unit 200 records the read image information. The recorded image information may be transmitted to another information processing device via the network 400. The recorded image information may be also be used to form an image on another sheet by use of the printer unit 130.

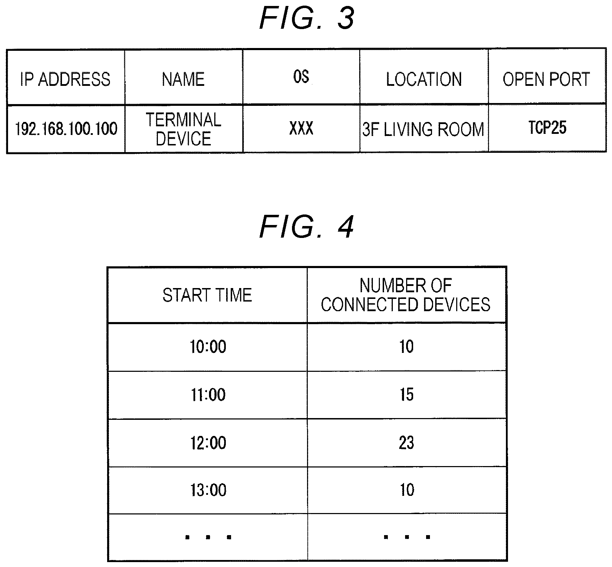

FIG. 3 is a diagram illustrating inventory information according to an embodiment. The inventory information is generated based on information acquired from another device connected to the network 400 to which the image forming apparatus 100 is connected. The inventory information is information about another device connected to the network 400. The inventory information is generated for each such device. The inventory information illustrated in FIG. 3 has values indicating an Internet protocol (IP) address, a name, an operating system (OS), a location, and an open port of the device connected to the network 400. The IP address value is an IP address set for the device. The name value indicates the assigned or indicated name of the device. The name may be designated by an administrator of the network 400 or may be designated by an owner of the device. The OS value indicates the particular OS that has been installed on the device. The location value indicates a physical location where the device is disposed. The location may be designated by the administrator of the network 400 or may be designated by the owner of the device. The open port value indicates a port number of an open port of the device. The open port may also indicate a protocol used for communications through the designated port, such as transmission control protocol (TCP) and user datagram protocol (UDP).

The specific example inventory information of FIG. 3 has "192.168.100.10" as the IP address, "terminal device" as the name, "XXX" as the OS, "3F living room" as the location, and "TCP25" as the open port. Therefore, according to the inventory information illustrated in FIG. 3, the device has the IP address, "192.168.100.10". The device has the name, "terminal device". An OS referred to as "XXX" is the OS installed in the device. The device is installed in "3F living room". The port "25" is open for "TCP" communication in the device. The inventory information is, of course, not limited to the example as illustrated in FIG. 3. For example, the inventory information may have additional information values other than just the IP address, the name, the OS, the location, and the open port. In general, the inventory information may have any information that can be acquired using SNMP or port scan.

FIG. 4 is a diagram illustrating a table with the number of network connected devices according to an embodiment. The table value for the "number of connected devices" indicates the number of devices connected to the network 400 at a particular start time. This table of the number of connected devices is stored in the storage device 153. The table illustrated in FIG. 4 has values for start times ("START TIME") and the number of connected devices at each listed start time ("NUMBER OF CONNECTED DEVICES"). The start time value indicates the time when a process related to the counting of the number of connected devices, including acquisition of device information or generation of the inventory information, was started. Such a process is executed at pre-designated intervals, for example. The designated interval may be, for example, one hour or two hours. In general, the start time may be any preset time. The value for the number of connected devices indicates the number of devices connected to the network 400 at each corresponding start time. The number of connected devices is counted based on information acquired from the devices connected to the network 400.

According to the number of connected devices of FIG. 4, the first listed start time is "10:00". That is, the process related to the counting of the number of connected devices, including acquisition of device information or generation of the inventory information, was started at 10:00. The number of connected devices at 10:00 is 10. In the example of FIG. 4, since the number of connected devices is counted every hour (that is, the pre-designated interval is one hour), the next start time is "11:00". The table for the number of connected devices evaluated at different times may include additional information other than just the evaluation start time and the number of connected devices counted at each time. The number of connected devices may be counted, and further broken down or otherwise indicated in the table, by device type(s), for example.

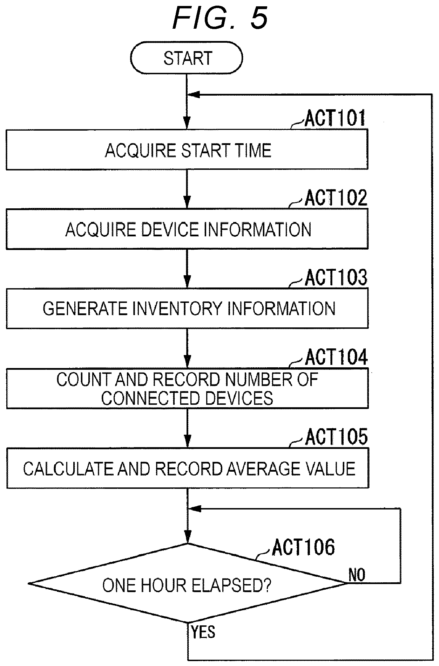

FIG. 5 is a flowchart of a process for calculating the number of connected devices and its average value according to an embodiment. The processor 154 of the image forming apparatus 100 performs a calculation (hereinafter, referred to as a "calculation process") of the number of connected devices and an average value when the start time arrives. In the flowchart illustrated in FIG. 5, the processor 154 performs the calculation process every hour. However, the execution interval of the calculation process is not limited to every hour. For example, the processor 154 may perform the calculation process every two hours, or may perform the calculation process every thirty minutes. The processor 154 may be configured to perform the calculation process at any preset time interval.

The processor 154 of the image forming apparatus 100 acquires a start time (ACT 101). Specifically, the processor 154 acquires the start time stored in the storage device 153. The processor 154 determines whether the start time coincides with the current time. The current time may be, for example, a time indicated by a system or hardware clock of the image forming apparatus 100. When the start time coincides with the current time, the processor 154 transitions to ACT 102. When the start time does not coincide with the current time, the processor 154 transitions to ACT 102 after the start time coincides with the current time.

The processor 154 acquires device information (ACT 102). The device information in this context is information about the devices connected to the network 400. Specifically, the processor 154 transmits an SNMP packet or command to acquire device information to the devices (for example, the DB server 300, the NAS 310, the web server 320, the terminal device 330, and the router 340) connected to the network 400. The processor 154 records information, which is acquired as responses transmitted by the various devices, in the storage device 153 as the device information. The acquired information is, for example, an IP address, a name, an OS, a location, and an activity log of the device. Next, the processor 154 transmits a packet to perform port scan on the devices (for example, the DB server 300, the NAS 310, the web server 320, the terminal device 330, and the router 340) connected to the network 400. The processor 154 records information, which is acquired from the devices by performing the port scan, in the storage device 153 as the device information. The information acquired by the port scan is, for example, open port numbers, closed port numbers, and filtered port numbers.

The processor 154 generates inventory information based on the acquired device information (ACT 103). Specifically, the processor 154 acquires the device information acquired from the devices connected to the network 400 from the storage device 153. The acquired device information includes both the device information acquired by the SNMP command and the device information acquired by the port scan. The processor 154 acquires information (e.g., the IP address, the name, the OS, the location, and the open port) from the device information acquired from each storage device 153. Next, the processor 154 generates the inventory information based on the acquired information. The processor 154 records the generated inventory information in the storage device 153. As described above, the processor 154 can acquire the number of connected devices over time by generating and recording the inventory information every hour.

The processor 154 counts the number of connected devices (ACT 104). For example, the processor 154 counts the number of different inventory information entries (see FIG. 3) generated in ACT 103. The processor 154 sets the counted number of inventory information entries as the number of connected devices. Then, the processor 154 records the counted number of connected devices for the corresponding start time in the table of the number of connected devices (see FIG. 4).

The processor 154 calculates an average value of the number of connected devices (ACT 105). Specifically, based on the table of the number of connected devices, the processor 154 acquires the numbers of connected devices from the first start time entry to the current time entry. The processor 154 then calculates an average value for the acquired total numbers of connected devices over the relevant time frame. The processor 154 records the calculated average value in the storage device 153. In this context, the calculated average value is a specific example of possibly acquired or calculated statistical information obtained by performing a predetermined statistical process on the acquired values for the number of connected devices over time. Such predetermined statistical process may be more complex than calculation of a simple numerical average from the acquired values.

The processor 154 determines whether one hour has elapsed after the previous acquisition of the device information in ACT 102 (ACT 106). When one hour has elapsed (ACT 106: YES), the processor 154 returns to ACT 101 and acquires the next start time. When one hour has not elapsed (ACT 106: NO), the processor 154 waits until one hour elapses. When the device information is to be acquired only a predetermined number of times, the processor 154 may be configured to end the process without returning to ACT 101. With such a configuration, it is possible to prevent an excessive collection of device information and an increase in the calculation load of the processor 154.

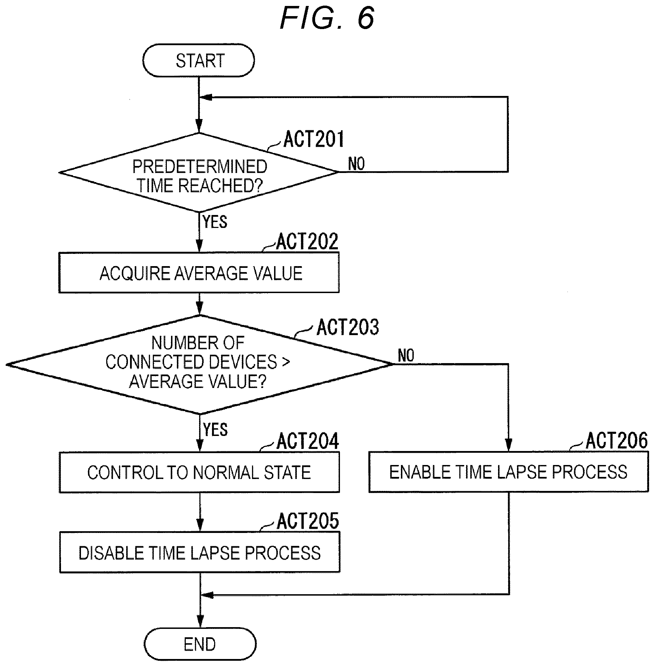

FIG. 6 is a flowchart of a state change process of the image forming apparatus 100 according to an embodiment. The state change process is performed at a predetermined time. The state change process may be performed immediately after the average value has been calculated at ACT 105 in FIG. 5. In the following example, the processor 154 performs the process illustrated in FIG. 6 every hour.

The processor 154 of the image forming apparatus 100 determines whether a predetermined time has come (ACT 201). Specifically, the processor 154 determines whether the clock of the image forming apparatus 100 has reached the predetermined time. When the predetermined time has not come (ACT 201: NO), the processor 154 transitions to ACT 201 and waits for the predetermined time. When the predetermined time has come (ACT 201: YES), the processor 154 acquires the average value from the storage device 153 (ACT 202).

The processor 154 determines whether the number of connected devices is larger than the average value (ACT 203). Specifically, the processor 154 acquires the last counted number of connected devices from the table of the number of connected devices, and compares the acquired number of connected devices with the average value.

Here, the processor 154 may acquire the present number of connected devices in real time. In such a case, the processor 154 acquires the device information from the devices connected to the network 400 as necessary. The processor 154 generates the inventory information every time the device information is acquired. The processor 154 counts the number of generated inventory information entries and then compares the counted number with the average value.

When the number of connected devices is larger than the average value (ACT 203: YES), the processor 154 controls the operation state of the image forming apparatus 100 from the power saving state to the normal state (ACT 204). Next, the processor 154 disables a time lapse process (ACT 205). The time lapse process is a process for changing the operation state of the image forming apparatus 100 to the power saving state when a predetermined condition is satisfied. For example, the predetermined condition is satisfied when a predetermined time has elapsed after the image forming apparatus 100 was most recently used for image formation or image reading. By disabling the time lapse process (also referred to as a time out process or an idle state transition), the processor 154 prevents the image forming apparatus 100 from transitioning to the power saving state even though the predetermined condition that might normally trigger the transition to the power saving state has been satisfied.

When the number of connected devices is equal to or less than the average value (ACT 203: NO), the processor 154 enables the time lapse process (ACT 206). By enabling the time lapse process, the processor 154 permits the operation state of the image forming apparatus 100 to transition to the power saving state when the predetermined condition is satisfied.

The processor 154 controls the operation state of the image forming apparatus 100 to be in the normal state when the number of connected devices is larger than the average value as calculated based on the device information. Therefore, the processor 154 controls the image forming apparatus 100 to maintain the normal state during a time period for which it is to be expected that users will more frequently use the image forming apparatus 100, such as when many print jobs are expected to be transmitted. Therefore, in the image forming apparatus 100, it is possible to further reduce the waiting time for users without disabling the power saving function of the image forming apparatus 100 entirely.

In the aforementioned embodiments, the image forming apparatus 100 is configured to calculate the average value and control whether to enter the power saving state. Alternatively, an external information processing device communicably connected to the image forming apparatus 100 may be configured to control whether to allow the image forming apparatus 100 to enter the power saving state.

In the aforementioned embodiments, the image forming apparatus 100 is configured to store the inventory information or calculate the average value. Alternatively, an external information processing device communicably connected to the image forming apparatus 100 may be configured to acquire the inventory information from the image forming apparatus 100 and record the acquired inventory information in a predetermined storage device. The external information processing device may be configured to calculate the average value based on the inventory information recorded in the storage device. The average value calculated by the external information processing device may be recorded in a predetermined storage device.

In the aforementioned embodiments, the image forming apparatus 100 is configured to compare the average value with the number of connected devices and control whether to enter the power saving state. Alternatively, according to an example not having all features of the independent claims, the image forming apparatus 100 may be configured to compare values (obtained by other statistical or analytic methods) other than the calculated average value to the present number of connected devices and control whether to enter the power saving state based on such a comparison. Such a value other than the average value may be any statistical information values, such as a maximum value, a minimum value, a most frequent value (mode value), and a median value of the numbers of connected devices counted in the past.

In the aforementioned embodiments, the image forming apparatus 100 may be configured to execute warm-up processing when the number of connected devices satisfies a predetermined condition. For example, the predetermined condition may be satisfied when the current time is the time that is historically associated with an expected maximum number of connected devices from among the numbers of connected devices stored in the storage device 153 (e.g., the same time on a previous day). During the warm-up, for example, the image forming unit of the printer unit 130 is heated and readied for printing operations. The image forming unit may be heated for a predetermined period of time or predetermined times at any intervals. With such a configuration, it is possible to maintain the printer unit 130 in a state in which printing can be readily performed. Consequently, it is possible to further reduce user waiting times.

In the aforementioned embodiments, based on the number of connected devices, which is obtained by counting the devices connected to the network 400, and the average value, it is determined whether to control the image forming apparatus 100 to be in the normal state (in which a power saving mode or modes is available) or an altered state (in which a power saving mode is avoided). However, the image forming system 1 may be configured to count devices satisfying a predetermined condition among the devices connected to the network 400. The predetermined condition is satisfied, for example, when a particular device type that may transmit a print job is connected or when the number of such a device type exceeds a threshold value. A device type that may transmit a print job is, for example, a device such as a personal computer, a smart phone, a tablet computer, or a router. The processor 154 may determine whether the devices connected to the network 400 are of a type that might transmit a print job, based on, for example, the OS type or the opened port number value included in the inventory information. With such a configuration, it is possible to count the number of devices that might transmit print jobs, so that it is possible to improve the accuracy in determining whether to control the image forming apparatus 100 to be in the normal state or otherwise.

In the aforementioned embodiments, the aspects shown in FIGs. 5 and 6 were executed by the processor 154, but in other examples, certain described aspects, functions, operations, or process may be executed or otherwise performed by a dedicated circuit such as a large-scale integration (LSI) circuit.

While certain embodiments have been described, these embodiments have been presented by way of example only, and are not intended to limit the scope of the inventions.

## Claims

1. An image processing apparatus (100), comprising:
a printer unit (130) configured to print an image on a sheet;
a network interface (151); and
a controller (154) configured to control modes of the image processing apparatus (100), the modes including a first mode in which power is supplied to the printer unit (130) and a second mode in which power is not supplied to the printer unit (130) or lower power is supplied to the printer unit (130) than in the first mode, wherein
the controller (154) is further configured to:
acquire device information via the network interface from devices (300, 310, 320, 330, 340) connected to a network (400),
count the number of the devices connected to the network,
calculate a statistical value for the counted number of the devices connected to the network based on a previous number of devices connected to the network at a previous time,
control the modes of the image processing apparatus based on the counted number of the devices and the calculated statistical value, and
maintain the first mode when the counted number of the devices and the statistical value satisfy a predetermined condition,
**characterized in that**:
the statistical value is an average value of the counted number of the devices at a plurality of previous times, and
the predetermined condition is satisfied when the counted number of the devices is greater than the average value.

2. The image processing apparatus according to claim 1, wherein the controller is configured to control the printer unit (130) to perform a warm-up operation when the predetermined condition is satisfied.

3. The image processing apparatus according to claim 1 or 2, wherein the device information is acquired at predetermined intervals.

4. The image processing apparatus according to any one of claims 1 to 3, wherein the device information is acquired at predetermined times during a day.

5. The image processing apparatus according to any one of claims 1 to 4, wherein the controller is further configured to:
acquire first and second device information by transmitting first and second packets, respectively, and
identify the devices by using the first and second device information to count the number thereof.

6. The image processing apparatus according to claim 5, wherein the controller is further configured to:
identify a type of each of the devices using the first and second device information, and
count the number of the devices of a predetermined type.

7. The image processing apparatus according to claim 5 or 6, wherein the first and second packets are transmitted according to different protocols.

8. The image processing apparatus according to any one of claims 5 to 7, wherein the first device information includes a network address used by a device in the network, and the second device information includes a port number that is open on the device.

9. A method performed by an image processing apparatus having a power saving mode, the method comprising:
acquiring device information from one or more devices connected to a network;
counting the number of the devices connected to the network;
calculating a statistical value for the number of the devices connected to the network based on a previous number of devices connected to the network at a previous time;
controlling whether the image processing apparatus can enter the power saving mode based on the counted number of the devices and the statistical value; and
maintaining a non-power saving mode when the counted number of the devices and the statistical value satisfy a predetermined condition,
**characterized in that**:
the statistical value is an average value of the counted number of the devices at a plurality of previous times, and
the predetermined condition is satisfied when the counted number of the devices is greater than the average value.

10. The method according to claim 9, further comprising:
performing a warm-up operation when the predetermined condition is satisfied.

11. The method according to claim 9 or 10, wherein the device information is acquired at predetermined intervals.

## Patentansprüche

1. Bildverarbeitungsvorrichtung (100), umfassend:
eine Druckereinheit (130), die konfiguriert ist, um ein Bild auf ein Blatt zu drucken;
eine Netzwerkschnittstelle (151); und
eine Steuervorrichtung (154), die konfiguriert ist, um Modi der Bildverarbeitungsvorrichtung (100) zu steuern, wobei die Modi einen ersten Modus umfassen, in dem der Druckereinheit (130) Strom zugeführt wird, und einen zweiten Modus, in dem der Druckereinheit (130) kein Strom oder der Druckereinheit (130) ein geringerer Strom als im ersten Modus zugeführt wird, wobei die Steuervorrichtung (154) weiter konfiguriert ist, um:
eine Vorrichtungsinformation über die Netzwerkschnittstelle von den Vorrichtungen (300, 310, 320, 330, 340), die mit dem Netzwerk (400) verbunden sind, zu erfassen,
die Anzahl von Vorrichtungen, die mit dem Netzwerk verbunden sind, zu zählen
den statistischen Wert für die gezählte Anzahl von Vorrichtungen, die mit dem Netzwerk verbunden sind, auf der Grundlage einer vorhergehenden Anzahl von Vorrichtungen, die mit dem Netzwerk an einem vorhergehenden Zeitpunkt verbunden sind, zu berechnen,
die Modi der Bildverarbeitungsvorrichtung auf der Grundalge der gezählten Anzahl der Vorrichtungen und des berechneten statistischen Werts zu steuern, und
den ersten Modus, wenn die gezählte Anzahl der Vorrichtungen und der statistische Wert die vorbestimmte Bedingung erfüllen, beizubehalten,
**dadurch gekennzeichnet, dass**:
der statistische Wert ein durchschnittlicher Wert der gezählten Anzahl der Vorrichtungen an einer Vielzahl der vorhergehenden Zeitpunkten ist, und
die vorbestimmte Bedingung erfüllt ist, wenn die gezählte Anzahl der Vorrichtungen grösser als der durchschnittliche Wert ist.

2. Bildverarbeitungsvorrichtung nach Anspruch 1, wobei die Steuervorrichtung konfiguriert ist, um die Druckereinheit (130) zu steuern, um einen Warmlaufbetrieb durchzuführen, wenn die vorbestimmte Bedingung erfüllt ist.

3. Bildverarbeitungsvorrichtung nach Anspruch 1 oder 2, wobei die Vorrichtungsinformation in vorbestimmten Intervallen erfasst wird.

4. Bildverarbeitungsvorrichtung nach einem der Ansprüche 1 bis 3, wobei die Vorrichtungsinformation an vorbestimmten Zeitpunkten während des Tages erfasst wird.

5. Bildverarbeitungsvorrichtung nach einem der Ansprüche 1 bis 4, wobei die Steuervorrichtung weiter konfiguriert ist, um:
eine erste und eine zweite Vorrichtungsinformation zu erfassen durch Übertragen von ersten bzw. von zweiten Paketen, und
die Vorrichtungen durch Verwenden der ersten und der zweiten Vorrichtungsinformation zu identifizieren, um die Anzahl davon zu zählen.

6. Bildverarbeitungsvorrichtung nach Anspruch 5, wobei die Steuerung weiter konfiguriert ist, um:
eine Art jeder der Vorrichtungen unter Verwendung der ersten und der zweiten Vorrichtungsinformation zu identifizieren, und
die Anzahl der Vorrichtungen einer vorbestimmten Art zu zählen.

7. Bildverarbeitungsvorrichtung nach Anspruch 5 oder 6, wobei die ersten und die zweiten Pakete gemäß verschiedenen Protokollen übertragen werden.

8. Bildverarbeitungsvorrichtung nach einem der Ansprüche 5 bis 7, wobei die erste Vorrichtungsinformation eine Netzwerkadresse, die von einer Vorrichtung im Netzwerk verwendet wird, beinhaltet, und die zweite Vorrichtungsinformation eine Portnummer, die auf der Vorrichtung offen ist, beinhaltet.

9. Verfahren, durchgeführt durch eine Bildverarbeitungsvorrichtung, aufweisend einen Stromsparmodus, wobei das Verfahren Folgendes umfasst:
Erfassen von Vorrichtungsinformation von einer oder von mehreren Vorrichtungen, die mit einem Netzwerk verbunden sind;
Zählen der Anzahl der Vorrichtungen, die mit dem Netzwerk verbunden sind;
Berechnen eines statistischen Werts für die Anzahl der Vorrichtungen, die mit dem Netzwerk verbunden sind, auf der Grundlage einer vorherigen Anzahl von Vorrichtungen die mit dem Netzwerk an einem vorhergehenden Zeitpunkt verbunden sind;
Steuern, auf der Grundlage der gezählten Anzahl der Vorrichtungen und des statistischen Werts, ob die Bildverarbeitungsvorrichtung in den Stromsparmodus eintreten kann; und
Beibehalten eines Nicht-Stromsparmodus, wenn die gezählte Anzahl der Vorrichtungen und der statistische Wert die vorbestimmte Bedingung erfüllen,
**dadurch gekennzeichnet, dass**:
der statistische Wert ein durchschnittlicher Wert der gezählten Anzahl der Vorrichtungen an einer Vielzahl der vorhergehenden Zeitpunkte ist, und
die vorbestimmte Bedingung erfüllt ist, wenn die gezählte Anzahl der Vorrichtungen grösser als der durchschnittliche Wert ist.

10. Verfahren nach Anspruch 9, weiter umfassend:
Durchführen eines Warmlaufbetriebs, wenn die vorherbestimmte Bedingung erfüllt ist.

11. Verfahren nach Anspruch 9 oder 10, wobei die Vorrichtungsinformation in vorbestimmten Intervallen erfasst wird.

## Revendications

1. Appareil de traitement d'image (100), comprenant :
une unité d'imprimante (130) configurée de manière à imprimer une image sur une feuille ;
une interface réseau (151) ; et
un contrôleur (154) configuré de manière à commander des modes de l'appareil de traitement d'image (100), les modes incluant un premier mode dans lequel l'unité d'imprimante (130) est alimentée électriquement, et un second mode dans lequel l'unité d'imprimante (130) n'est pas alimentée électriquement ou dans lequel l'unité d'imprimante (130) est alimentée électriquement à une puissance inférieure à celle du premier mode, dans lequel
le contrôleur (154) est en outre configuré de manière à :
acquérir des informations de dispositifs, par l'intermédiaire de l'interface réseau, à partir de dispositifs (300, 310, 320, 330, 340) connectés à un réseau (400),
compter le nombre des dispositifs connectés au réseau ;
calculer une valeur statistique pour le nombre compté des dispositifs connectés au réseau, sur la base d'un nombre antérieur de dispositifs connectés au réseau à un instant antérieur ;
commander les modes de l'appareil de traitement d'image sur la base du nombre compté des dispositifs et de la valeur statistique calculée ; et
maintenir le premier mode lorsque le nombre compté des dispositifs et la valeur statistique satisfont une condition prédéterminée ;
**caractérisé en ce que** :
la valeur statistique est une valeur moyenne du nombre compté des dispositifs à une pluralité d'instants antérieurs ; et
la condition prédéterminée est satisfaite lorsque le nombre compté des dispositifs est supérieur à la valeur moyenne.

2. Appareil de traitement d'image selon la revendication 1, dans lequel le contrôleur est configuré de manière à commander à l'unité d'imprimante (130) de mettre en oeuvre une opération de chauffe lorsque la condition prédéterminée est satisfaite.

3. Appareil de traitement d'image selon la revendication 1 ou 2, dans lequel les informations de dispositifs sont acquises à des intervalles prédéterminés.

4. Appareil de traitement d'image selon l'une quelconque des revendications 1 à 3, dans lequel les informations de dispositifs sont acquises à des instants prédéterminés de la journée.

5. Appareil de traitement d'image selon l'une quelconque des revendications 1 à 4, dans lequel le contrôleur est en outre configuré de manière à :
acquérir des premières et secondes informations de dispositifs en transmettant des premier et second paquets, respectivement ; et
identifier les dispositifs en utilisant les premières et secondes informations de dispositifs en vue de compter le nombre des dispositifs.

6. Appareil de traitement d'image selon la revendication 5, dans lequel le contrôleur est en outre configuré de manière à :
identifier un type de chacun des dispositifs en faisant appel aux premières et secondes informations de dispositifs ; et
compter le nombre des dispositifs d'un type prédéterminé.

7. Appareil de traitement d'image selon la revendication 5 ou 6, dans lequel les premier et second paquets sont transmis selon des protocoles différents.

8. Appareil de traitement d'image selon l'une quelconque des revendications 5 à 7, dans lequel les premières informations de dispositifs incluent une adresse réseau utilisée par un dispositif dans le réseau, et les secondes informations de dispositifs incluent un numéro de port qui est ouvert sur le dispositif.

9. Procédé mis en oeuvre par un appareil de traitement d'image présentant un mode d'économie d'énergie, le procédé comprenant les étapes ci-dessous consistant à :
acquérir des informations de dispositifs à partir d'un ou plusieurs dispositifs connectés à un réseau ;
compter le nombre des dispositifs connectés au réseau ;
calculer une valeur statistique pour le nombre des dispositifs connectés au réseau, sur la base d'un nombre antérieur de dispositifs connectés au réseau à un instant antérieur ;
commander si l'appareil de traitement d'image peut passer en mode d'économie d'énergie sur la base du nombre compté des dispositifs et de la valeur statistique ; et
maintenir un mode de non-économie d'énergie lorsque le nombre compté des dispositifs et la valeur statistique satisfont une condition prédéterminée ;
**caractérisé en ce que** :
la valeur statistique est une valeur moyenne du nombre compté des dispositifs à une pluralité d'instants antérieurs ; et
la condition prédéterminée est satisfaite lorsque le nombre compté des dispositifs est supérieur à la valeur moyenne.

10. Procédé selon la revendication 9, comprenant en outre l'étape ci-dessous consistant à :
mettre en oeuvre une opération de chauffe lorsque la condition prédéterminée est satisfaite.

11. Procédé selon la revendication 9 ou 10, dans lequel les informations de dispositifs sont acquises à des intervalles prédéterminés.
